# EUROPÄISCHE PATENTSCHRIFT

(11) **EP 1 525 448 B1**
(45) Veröffentlichungstag und Bekanntmachung des Hinweises auf die Patenterteilung: **08.09.2010**
(21) Anmeldenummer: 02754950.0
(22) Anmeldetag: 26.07.2002
(51) Int. Cl.: G01N 1/28

(54) **VERFAHREN ZUM AUFBEREITEN EINES BIOLOGISCHEN MATERIALS FÜR EINE UNTERSUCHUNG MIT EINEM MIKROSKOP SOWIE ENTSPRECHENDE ANORDNUNG MIT EINEM DERART AUFBEREITETEN BIOLOGISCHEN MATERIAL**
METHOD FOR PREPARING A BIOLOGICAL MATERIAL FOR EXAMINATION UNDER A MICROSCOPE, AND CORRESPONDING ARRANGEMENT COMPRISING A BIOLOGICAL MATERIAL PREPARED USING SAID METHOD
PROCEDE DE PREPARATION D'UNE MATIERE BIOLOGIQUE POUR UNE ANALYSE AU MICROSCOPE ET SYSTEME CORRESPONDANT COMPRENANT UNE MATIERE BIOLOGIQUE PREPAREE PAR CE PROCEDE

(43) Veröffentlichungstag der Anmeldung: 27.04.2005
(73) Patentinhaber: Carl Zeiss MicroImaging GmbH, Carl-Zeiss-Promenade 10 07745 Jena (DE)
(72) Erfinder: SCHÜTZE, Karin, 82327 Tutzing (DE); BUSCH, Christer, S-756 46 Uppsala (SE); BJORNSEN, Tone, N-9015 Tromso (NO)
(74) Vertreter: Banzer, Hans-Jörg
(86) Internationale Anmeldenummer: PCT/EP2002/008399
(87) Internationale Veröffentlichungsnummer: WO 2004/015397

(56) Entgegenhaltungen:
- EP-A- 0 409 550
- WO-A-00/66994
- WO-A-02/14833
- WO-A-97/13838
- DE-A- 10 015 156
- US-A1- 2002 025 511
- EMMERT-BUCK M R ET AL: "LASER CAPTURE MICRODISSECTION" SCIENCE, AMERICAN ASSOCIATION FOR THE ADVANCEMENT OF SCIENCE,, US, Bd. 274, Nr. 5289, 8. November 1996 (1996-11-08), Seiten 998-1001, XP000644727 ISSN: 0036-8075

## Beschreibung

Die vorliegende Erfindung betrifft ein Verfahren zur Aufbereitung eines biologischen Materials oder Präparats, insbesondere eines Gewebeschnitts auf einem Objektträger, für eine Untersuchung mit einem Mikroskop sowie eine entsprechende Anordnung eines derart aufbereiteten biologischen Materials auf einem Trägermittel, beispielsweise einem Glas-Objektträger. Insbesondere betrifft die vorliegende Erfindung ein derartiges Verfahren zur Vorbereitung einer Untersuchung des (nachfolgend auch als Untersuchungsmaterial bezeichneten) biologischen Materials mit einem Laser-Mikrodissektionssystem, bei welchem mittels Laserstrahlung aus dem biologischen Material einzelne Objekte ausgeschnitten und/oder herauskatapultiert und in geeigneten Aufnahmebehältern gesammelt werden können.

Aus der WO 97/29355 A oder WO 01/73398 A der Anmelderin ist bekannt, einzelne Objekte, welche auf einem planaren Objektträger angeordnet sind; rechnergestützt zu selektieren und mit einem Laserstrahl zu bearbeiten. Dabei kann ein selektiertes Objekt von der umgebenden Masse beispielsweise mit Hilfe des Laserstrahls rechnergestützt abgetrennt werden, um das jeweils selektierte Objekt von der umgebenden Masse freizulegen. Anschließend kann das freigelegte Objekt durch einen Laser-induzierten Transportprozess mit Hilfe eines Laserimpulses, welcher auf das freigelegte Objekt gerichtet wird, von dem Objektträger zu einem Auffangbehälter katapultiert werden. Das Laser-Mikrodissektionssystem umfasst somit neben einem Mikroskop zur Untersuchung oder

Betrachtung des auf dem jeweiligen Objektträger befindlichen Untersuchungsmaterials auch eine Lasereinrichtung, welche einen Laserstrahl, vorzugsweise einen UV-Laserstrahl, auf das Untersuchungsmaterial richtet, um ein zuvor selektiertes Objekt von dem umgebenden Untersuchungsmaterial abzutrennen bzw. herauszukatapultieren. Als Auffangbehälter kommen beispielsweise Mikrozentrifugen- oder Eppendorfbehälter bzw. die Kappen derartiger Behälter in Frage. Ebenso können sog. Mikrotiterplatten mit einer Vielzahl von Vertiefungen oder "Wells" als Auffangbehälter eingesetzt werden.

Aus der WO 00/66904 A ist ein Aufbereitungsverfahren nach dem Oberbegriff des Anspruchs 1 und eine Anordnung nach dem Oberbegriff des Anspruchs 21 bekannt.

Generell ist es bei der Aufbereitung von Untersuchungsmaterialien, welche beispielsweise für eine nachfolgende Bearbeitung mit einem Mikroskop untersucht und vorbereitet werden sollen, erforderlich, das Untersuchungsmaterial derart aufzubereiten, dass eine möglichst gute Untersuchung des Untersuchungsmaterials bei einer Betrachtung des Untersuchungsmaterials mit dem Mikroskop möglich ist.

Bei biologischen Untersuchungsmaterialien, wie z.B. Gewebeschnitten, stellt sich jedoch grundsätzlich das Problem, dass das auf den jeweiligen Objektträger aufgebrachte Untersuchungsmaterial keine vollständig ebene Oberfläche aufweist, so dass eine ausreichend gute visuelle Betrachtung über die gesamte Oberfläche des Untersuchungsmaterials nicht möglich ist. Bei einer Laser-gestützten Bearbeitung von biologischen Untersuchungsmaterialien, wie beispielsweise gemäß dem zuvor beschriebenen Laser-Mikrodissektionsverfahren der Anmelderin, wird durch die Verwendung der Mischung, Zubereitung und/oder Reinsubstanz eine bestimmungsgemässe Nutzung des Mikrodissektions-Systems erleichtert, verbessert bzw. erst möglich.

Der vorliegenden Erfindung liegt daher die Aufgabe zu Grunde, ein Verfahren zum Aufbereiten eines biologischen Materials für eine Untersuchung mit einem Mikroskop sowie eine Anordnung mit einem derart aufbereiteten biologischen Material und einem Trägermittel, auf dem das biologische Material angeordnet ist, zur Verfügung zu stellen, wobei die optischen Untersuchungseigenschaften des biologischen Materials verbessert sind, so dass auf Grund der verbesserten Visualisierung eine bessere und genauere Betrachtung des biologischen Materials mit dem Mikroskop möglich ist. Insbesondere soll das mit Hilfe der vorliegenden Erfindung aufbereitete biologische Präparat auch zum Einsatz in einem Laser-Mikrodissektionssystem der zuvor beschriebenen Art geeignet sein, ohne dass durch die Laserstrahlung eine nachteilige Beeinträchtigung der Untersuchungseigenschaften des Materials erfolgt.

Diese Aufgabe wird erfindungsgemäß durch ein Verfahren mit den Merkmalen des Anspruchs 1 bzw. eine Anordnung mit den Merkmalen des Anspruchs 21 gelöst. Die Unteransprüche definieren jeweils bevorzugte und vorteilhafte Ausführungsformen der vorliegenden Erfindung.

Im Rahmen der vorliegenden Erfindung wird vorgeschlagen, auf das biologische Material eine in einem Lösungsmittel gelöste transparente, d.h. lichtdurchlässige Substanz in Form einer Zubereitung, Mischung und/oder Reinsubstanz aufzubringen, um Unebenheiten in der Oberfläche des jeweiligen biologischen Materials, beispielsweise eines Gewebeschnitts, auszugleichen und somit die Visualisierung des biologischen Materials und die Möglichkeit der Betrachtung mit Hilfe eines Mikroskops zu verbessern. Darüber hinaus ist die aufgebrachte Zubereitung, Mischung und/oder Reinsubstanz derart beschaffen, dass sie sich nach Aufbringen auf die Oberfläche des Untersuchungsmaterials in Form eines Trocknens, Aushärtens oder Polymerisierens verdichtet oder aushärtet, so dass eine verfestigte Schicht vorzugsweise über die gesamte Oberfläche des Untersuchungsmaterials ausgebildet ist.

Wie bereits zuvor erwähnt worden ist, können mit Hilfe der aufgebrachten Monomer- oder Polymersubstanz Unebenheiten in der Oberfläche des jeweiligen Untersuchungsmaterials ausgeglichen werden, so dass eine im Wesentlichen gleichmäßig ebene Oberfläche des Untersuchungsmaterials erzielt wird. Die solchermaßen veränderte diffuse Lichtstreuung erlaubt eine einfache und genaue Untersuchung des Untersuchungsmaterials mit einem Mikroskop. Darüber hinaus wird somit eine Schutzschicht gebildet, welche die Oberfläche des Untersuchungsmaterials vor Kontamination, Zersetzung oder Abbau untersuchungsrelevanter Komponenten, beispielsweise durch Staub oder RNAsen, schützt und zudem das gesamte Untersuchungsgut strukturell unterstützt, so dass beim Schneiden einzelner Objekte mit einem Laserstrahl, beispielweise einem UV-Laserstrahl, keine Partikel abplatzen oder beim Katapultieren mit dem Laserstrahl keine ungewollten Partikel auf dem Objektträger entstehen oder abplatzen.

Die erfindungsgemäß vorgeschlagene Substanz in Form einer Zubereitung, Mischung und/oder Reinsubstanz ist vorzugsweise derart beschaffen, dass sie sich möglichst leicht auf die Oberfläche des Untersuchungsmaterials auftragen lässt. Demzufolge kann die in dem Lösungsmittel gelöste und transparente Zubereitung, Mischung und/oder Reinsubstanz beispielsweise in Form eines Sprays oder Tauchbads ausgestaltet sein. Ebenso ist die Zubereitung, Mischung und/oder Reinsubstanz vorzugsweise nicht oder zumindest kaum toxisch, d.h. ungiftig, da bei einer nachfolgenden Bearbeitung des Präparats beispielsweise mit Hilfe einer Laserbestrahlung die Schicht in ihrem Endzustand zusammen mit dem entsprechenden, durch die Laserbestrahlung herausgelösten Objekt an dem jeweiligen Objekt haften bleibt und zusammen mit diesem in einem geeigneten Behälter aufbewahrt und von einer Bedienperson beispielsweise anschließend näher untersucht wird. Da derartige ausgeschnittene oder herauskatapultierte Proben in der Regel zur Weiterbearbeitung in einer wässrigen Lösung aufgelöst werden, sollte auch die auf das jeweilige Untersuchungsmaterial aufgebrachte Zubereitung, Mischung und/oder Reinsubstanz in wässriger Lösung gut löslich sein.

Ebenso wird vorzugsweise eine Zubereitung, Mischung und/oder Reinsubstanz verwendet, welche derart beschaffen ist, dass möglichst keinerlei Beeinflussung nachfolgender Analysen, z.B. molekularer Analysen gegeben ist. Als erfindungsgemäße Zubereitung, Mischung und/oder Reinsubstanz kommen somit vorzugsweise für das Untersuchungsmaterial hinsichtlich seiner Untersuchung nicht schädliche Mischungen, Zubereitungen oder Reinsubstanzen in Frage, wie beispielsweise Poly-, kurz- oder langkettige und/oder ganz oder teilweise ungesättigte Säuren und/oder Basen, -amide, -alkohole, -carbonate, Silikone oder Mischungen bzw. Zubereitungen davon oder ähnlicher als Zubereitung, Mischung und/oder Reinsubstanz verwendbarer Substanzen.

Um eine Anwendung des erfindungsgemäß vorbereiteten Präparats in einem Laser-Mikrodissektionssystem zu ermöglichen, ist die aufgebrachte Zubereitung, Mischung und/oder Reinsubstanz auch in Abhängigkeit von der Wellenlänge des verwendeten Lasers derart beschaffen, dass das von dem Laser emittierte Laserlicht möglichst vollständig von dieser Zubereitung, Mischung und/oder Reinsubstanz absorbiert wird, um die Zubereitung, Mischung und/oder Reinsubstanz zusammen mit dem davon bedeckten Untersuchungsmaterial möglichst effektiv, d.h. mit einem bestmöglichen Wirkungsgrad, schneiden bzw. herauskatapultieren zu können.

Wie bereits beschrieben worden ist, wird die Zubereitung, Mischung und/oder Reinsubstanz in einem Lösungsmittel gelöst oder direkt als Reinsubstanz auf die Oberfläche des jeweiligen Untersuchungsmaterials aufgetragen. Als Lösungsmittel können beispielsweise Isopropanol oder andere, kurzkettige Alkohole, Ketone, Ester, Wasser oder Mischungen dieser oder ähnlicher als Lösungsmittel dienender Substanzen mit oder ohne Stabilisierungssubstanzen verwendet werden. Nach der Verdunstung oder dem Abzug des Lösungsmittels kann es zu einer Verdichtung oder einem Aufbau einer Polymerstruktur oder zur Polymerisation und somit zur Ausbildung der gewünschten Schutzschicht kommen, welche Unebenheiten auf der Oberfläche des Untersuchungsmaterials ausgleicht. Die Zubereitung, Mischung und/oder Reinsubstanz sollte in seinem Endzustand für eine möglichst gute Betrachtung des Untersuchungsmaterials über eine Angleichung des Brechungsindex an das Untersuchungsmaterial und seiner umgebenden Materialien unter Reduzierung des ungewollten Streulichtes verfügen.

Nachdem im Bereich der Laser-Mikrodissektion häufig mit Schnittpräparaten gearbeitet wird, welche beispielsweise mit histochemischen oder immunologischen Farbstoffen gefärbt worden sind, ist die Zubereitung, Mischung und/oder Reinsubstanz vorzugsweise auch derart gestaltet, dass es Wechselwirkungen des Lasers beim Schneiden von derartigen mit beispielsweise histochemischen oder immunologischen Farbstoffen gefärbten Schnittpräparaten minimiert und diesbezüglich die Untersuchungs- und Manipulationseigenschaften des Untersuchungsmatgerials verbessert. Dasselbe gilt auch für fluoreszenzgefärbte Untersuchungsmaterialien, wobei bei Bestrahlung der Untersuchungsmaterialien mit Licht einer Wellenlänge die Fluoreszenz an den entsprechend eingefärbten Objekten hervorgerufen werden kann, um somit verschiedene Untersuchungseigenschaften des Untersuchungsmaterials feststellen zu können. Insbesondere kann auf diese Weise beispielsweise auch eine Unterscheidung zwischen malignen und benignen Zellen des untersuchten Präparats möglich sein etc. Demzufolge ist es von Vorteil, wenn in die auf die Oberfläche des Untersuchungsmaterials aufzubringende Schicht Substanzen eingearbeitet sind, welche beispielsweise die RNA, DNA oder/und Proteine des Untersuchungsmaterials konservieren und/oder die Fluoreszenz der Farbstoffe auf gewünschte Art und Weise beeinflussen.

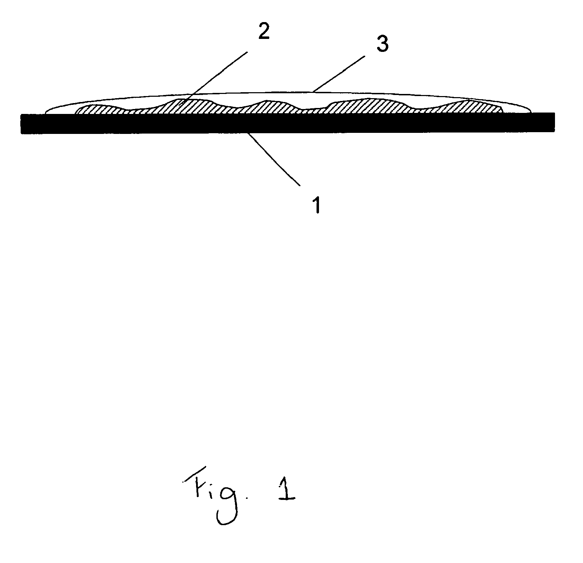

Die vorliegende Erfindung wird nachfolgend näher unter Bezugnahme auf die beigefügte Zeichnung anhand bevorzugter Ausführungsbeispiele erläutert.

In der einzigen Figur ist ein Objektträger 1 mit einem darauf aufgebrachten Untersuchungsmaterial 2, beispielsweise einem Gewebeschnitt, dargestellt. Bei dem Objektträger 1 kann es sich insbesondere um einen herkömmlichen Glasobjektträger handeln. Ebenso kann jedoch auch ein Glasobjektträger mit einer darauf gespannten Folie oder Membran, welche das Laserlicht des jeweils verwendeten Lasers absorbiert, verwendet werden, so dass die Membran zusammen mit dem darauf befindlichen Untersuchungsmaterial 2 ausgeschnitten und ggf. in einem Aufnahmebehälter katapultiert wird. Die Verwendung einer derartigen Membran gewährleistet, dass das durch die Laserbestrahlung ausgeschnittene Untersuchungsmaterial 2 in einem Stück in den Aufnahmebehälter transferiert wird. Schließlich kann als Objektträger beispielsweise auch lediglich eine Membran oder eine Membran-Membran-Kombination verwendet werden, wobei im letztgenannten Fall die untere Membran nicht laserlichtabsorbierend ist und als Träger dient, während die unmittelbar unter dem Untersuchungsmaterial 2 und auf der anderen Membran befindliche Membran laserlichtabsorbierend ist und somit zusammen mit dem Untersuchungsmaterial 2 per Laserbestrahlung ausgeschnitten sowie ggf. katapultiert werden kann.

Wie ebenfalls aus der Figur ersichtlich ist, ist auf die Oberfläche des Untersuchungsmaterials 2 eine transparente Schicht 3 aufgetragen, welche nicht giftige und für das Untersuchungsmaterial hinsichtlich der Untersuchung nicht nachteilige Zubereitungen, Mischungen oder Reinsubstanzen enthält. Dies können Poly-, kurz- oder langkettige und/oder ganz oder teilweise ungesättigte Säuren und/oder Basen, -amide, -alkohole, -carbonate oder Silikone oder Mischungen bzw. Zubereitungen davon oder ähnliche, als Zubereitung, Mischung und/oder Reinsubstanz verwendbarer Substanzen sein. Die jeweils verwendeten Substanzen sollten sich somit vorzugsweise nicht negativ auf das Untersuchungsmaterial bzw. Gewebe 2 auswirken bzw. durch ungewollte chemische Reaktionen, wie z.B. Komplexierung, Radikalbildung, oder sonstige Reaktionen, das Gewebe oder hinsichtlich der Untersuchung in das Gewebe eingebrachte Stoffe oder Verbindungen beeinflussen oder sogar zerstören.

Die Zubereitung, Mischung und/oder Reinsubstanz wird in einem Lösungsmittel gelöst oder als Reinsubstanz auf die Oberfläche des Untersuchungsmaterials 2 aufgetragen, wobei dies auf einfache Art und Weise durch Aufsprühen als Aerosol, Aufpinseln oder auch durch Eintauchen des Untersuchungsmaterials in ein Tauchbad erfolgen kann. Da die Zubereitung, Mischung und/oder Reinsubstanz in einem flüssigen Zustand oder als Aerosol auf die Oberfläche des Untersuchungsmaterials 2 aufgetragen wird, kann die entsprechende Flüssigkeit oder Aerosol in die Unebenheiten, welche in der Oberfläche des Untersuchungsmaterials 2 wie in der Figur dargestellt ausgebildet sind, eintreten und diese somit ausgleichen. Durch geeignete Maßnahmen geht das Untersuchungsmaterial von seinem Anfangszustand, bei dem die Zubereitung, Mischung und/oder Reinsubstanz mit einem sehr großen Abstand zwischen den einzelnen Polymersträngen oder in einem "entknäuelten" Zustand vorliegt, in seinen Endzustand über, bei dem sich die Polymerstränge ausbilden, diversifizieren, beispielsweise "verknäulen" oder "verfasern". Die Zubereitung, Mischung und/oder Reinsubstanz verdichtet sich mit abnehmendem Lösungsmittelgehalt oder durch Reaktion, so dass die auf die Oberfläche des Untersuchungsmaterials 2 aufgebrachte Schicht 3 sich insgesamt verfestigt und trocknet, d.h. es findet eine Art Aushärtung der Schicht 3 statt. Dabei ist jedoch zu beachten, dass nicht unbedingt ein absolut trockener und mechanisch sehr fester Zustand angenommen werden muss. Es genügt bereits, wenn eine Verdichtung bzw. Verfestigung der Schicht 3 derart stattfindet, dass ein Schneiden und Katapultieren mit einem Laser möglich ist, d.h. es genügt, wenn die Schicht 3 so trocken und verfestigt ist, dass sie z.B. nicht mehr klebrig ist.

Da es nach der Verdunstung des Lösungsmittels zur Verdichtung der Polymerstruktur und somit zur Ausbildung der gewünschten Schutzschicht 3 für das Untersuchungsmaterial 2, welches insbesondere Unebenheiten in der Oberfläche des Untersuchungsmaterials 2 ausgleicht und somit die optische Beschaffenheit des Untersuchungsmaterials 2 verbessert, kommt, sollte die Zubereitung, Mischung und/oder Reinsubstanz derart beschaffen sein, dass es in seiner polymerisierten bzw. verdichteten oder verfestigten und im Wesentlichen lösungsmittelfreien Struktur optimierte optische Eigenschaften hinsichtlich der genauen visuellen Untersuchung des Untersuchungsmaterials 2 mit einem Mikroskop, beispielsweise in einem Laser-Mikrodissektionssystem, ermöglicht. Dies geschieht beispielsweise durch eine laterale Homogenisierung des Lichtweges durch das Untersuchungsmaterial. Idealerweise erfolgt eine Minimierung oder Unterbindung von ungewolltem Streulicht und eine Angleichung des Brechungsindex an das das Untersuchungsmaterial umgebende Material, wie beispielsweise die Trägermembran oder den Glas-Objektträger.

Als kommerzielle Produkte, welche im Rahmen der vorliegenden Erfindung zur Realisierung der Schutzschicht 3 eingesetzt werden können, können beispielsweise die unter den Bezeichnungen "Formvar"^{™} oder "PinPoint"^{™} vertriebenen Zubereitungen verwendet werden. Besonders vorteilhaft ist die Verwendung der unter dem Handelsnamen "Gum Rosin"^{™} vertriebenen Zubereitung, welche sämtliche hierin beschriebenen Eigenschaften bzw. Anforderungen an die Zubereitung erfüllt und insbesondere ein wirkungsvolles Ausgleichen von Unebenheiten in dem jeweiligen Gewebeschnitt bzw. Untersuchungsmaterial 2 und somit eine deutlich verbesserte Visualisierung ermöglicht und zudem leicht auftragbar, und in wässrigem Medium gut löslich ist. Darüber hinaus ist die letztgenannte Zubereitung auch derart beschaffen, dass es nachfolgende molekulare Analysen in keiner Weise beeinflusst und sich auf Grund seiner Absorptionseigenschaften gegenüber UV-Laserlicht in seinem Endzustand sehr gut mit einem UV-Laser schneiden bzw. katapultieren lässt.

Die Zubereitung "Gum Rosin"^{™} weist näherungsweise folgende Harzzusammensetzung auf:

| Harzsäureanteil: | |
|---|---|
| Abietinsäure | 18% |
| Lävopimarsäure | 32% |
| Neoabietinsäure | 11% |
| Abietar-8,13-Dien-18-Carbonsäure ("Palustric Acid") | 12% |
| Pimarsäure | 9% |
| Isopimarsäure | 3% |
| Andere | 5% |
| Neutraler Anteil: | 10% |

Im Bereich der Laser-Mikrodissektion werden ausgeschnittene bzw. herauskatapultierte Proben in der Regel zur Weiterbearbeitung in wässriger Lösung (Puffer der unterschiedlichsten Art, je nach gewünschter Analyse) aufgelöst. Demzufolge ist es generell wünschenswert, wenn die auf die Oberfläche des Untersuchungsmaterials 2 aufgebrachte Schutzschicht 3 in wässrigem Medium gut löslich ist.

Wie bereits zuvor erläutert worden ist, können beim Schneiden bzw. Katapultieren von Proben in einem Laser-Mikrodissektionssystem Wechselwirkungen zwischen dem verwendeten Laser und der Probe derart auftreten, dass bestimmte Untersuchungseigenschaften der Probe, welche für nachfolgende molekulare Analysen etc. erforderlich sind, beeinflusst oder verändert werden. So werden beispielsweise für derartige molekulare Analysen Schnittpräparate häufig mit beispielsweise histochemischen oder immunologischen Farbstoffen gefärbt, oder es werden beispielsweise fluoreszenzgefärbte Präparate verwendet, wobei in der nachfolgenden Analyse des Präparats die Fluoreszenz des Präparats ausgewertet wird. Beim Schneiden von derartigen Präparaten mit Hilfe eines Lasers können die Wirkung der Fluoreszenz und der Farbstoffe sowie beispielsweise die RNA, DNA oder Proteine des Präparats beeinträchtigt werden.

Demzufolge ist es von Vorteil, wenn die auf der Oberfläche des Untersuchungsmaterials 2 aufgebrachte Mischung, Zubereitung oder Reinsubstanz 3 konservierende oder andersartig die Untersuchungseigenschaften des Untersuchungsmaterials verbessernde Substanzen enthält. Insbesondere bieten sich Substanzen an, welche die RNA ("Ribonukleinsäure") konservieren, und/oder Substanzen, welche die Fluoreszenzeigenschaften der Farbstoffe oder allgemein die Wirkung der Farbstoffe begünstigten, d.h. auf gewünschte Art und Weise beeinflussen.

Beispielsweise kann zur Konservierung der RNA des Untersuchungsmaterials 2 die Schutzschicht 3 insbesondere eine unter dem Namen RNAlater^{™} vertriebene Substanz der Firma Ambion enthalten, wobei es sich hierbei um eine RNA-Stabilisierungssubstanz handelt. Ebenso können ähnliche RNA konservierende Substanzen, welche beispielsweise auf Amoniumsulfat in einer wässrigen Lösung basieren, verwendet werden.

Was die Substanzen zur Erhaltung bzw. Erzielung der gewünschten Fluoreszenz-Untersuchungseigenschaften des Präparats anbelangt, können sowohl Fluorophore, d.h. Farbstoffe, welche der Anregung mit definierten Anregungswellenlängen Licht anderer Wellenlänge(n) emittieren, als auch sog. "Quencher", d.h. Agentien, welche eine Fluoreszenzemission bei bestimmten Lichtwellenlängen durch Abregung auf strahlungslose Kanäle unterbinden, in die die Schutzschicht 3 ergebende Mischung, Zubereitung oder den Reinstoff eingebracht werden. "Quencher" im eigentlichen physikochemischen Sinne sind Substanzen, die auf Grund ihrer elektronischen Struktur sehr leicht Energie aufnehmen können und diese dann strahlungslos oder auf anderen Abregungskanälen unschädlich für Gewebe oder Moleküle abgeben. Beispiele für derartige Quencher, welche in der Schutzschicht 3 verwendet werden können, sind z.B. Ketone wie Dimethylketon, Dimethylamin, Phenylmethylketon oder Acetylnaphtalin. Die zuvor genannten Quencher werden in der Schutzschicht 3 insbesondere dann eingesetzt, wenn der Energieeintrag durch den verwendeten Laser so groß ist, dass durch Energietransfer auf andere Moleküle, z.B. das Makromolekül DNA, RNA oder Proteine diese durch direkte Bindungsspaltung, Konformationsänderung oder andere Änderungen in der Primär, Sekundär, Tertiär- oder Quartärstruktur zerstört oder für nachfolgende Untersuchungen ungünstig beeinflusst werden könnten.

Dabei werden im Rahmen der vorliegenden Erfindung insbesondere Quencher eingesetzt, welche durch Quenching im Sinne einer Stern-Vollmer-Analyse die Fluoreszenz bei bimolekularem Quenching wesentlich stärker unterbinden als deren Eigenabregung bei inhärent-unimolekularer Kinetik erlaubt. Dies bedingt, dass die Fluoreszenzlebensdauer bei Anwesenheit der Quenchersubstanz signifikant geringer ist als bei Abwesenheit der Quenchersubstanz. Implizit werden auch höhermolekulare Kinetiken in diese Annahmen eingeschlossen.

## Patentansprüche

1. Verfahren zum Aufbereiten eines biologischen Materials für eine Untersuchung mit einem Mikroskop,
wobei auf eine Oberfläche des biologischen Materials (2) eine transparente Schicht (3) zur Ausgleichung von Unebenheiten der Oberfläche des biologischen Materials (2) zur Verbesserung von Untersuchungseigenschaften des biologischen Materials (2) aufgebracht wird,
**dadurch gekennzeichnet,**
**dass** die Schicht (3) eine Laserlicht absorbierende Schicht ist.

2. Verfahren nach Anspruch 1,
**dadurch gekennzeichnet,**
**dass** die Schicht (3) auf die Oberfläche des biologischen Materials (2) aufgesprüht wird.

3. Verfahren nach Anspruch 1,
**dadurch gekennzeichnet,**
**dass** die Schicht (3) auf die Oberfläche des biologischen Materials (2) aufgepinselt wird.

4. Verfahren nach Anspruch 1,
**dadurch gekennzeichnet,**
**dass** die Schicht (3) auf die Oberfläche des biologischen Materials (2) durch Eintauchen des biologischen Materials (2) in ein Tauchbad aufgebracht wird.

5. Verfahren nach einem der vorhergehenden Ansprüche,
**dadurch gekennzeichnet,**
**dass** die Schicht (3) nicht giftig ist.

6. Verfahren nach einem der vorhergehenden Ansprüche,
**dadurch gekennzeichnet,**
**dass** die Schicht (3) inert ist und beim Aufbringen auf das biologische Material (2) das biologische Material (2) chemisch und biologisch nicht nachteilig beeinflusst.

7. Verfahren nach einem der vorhergehenden Ansprüche,
**dadurch gekennzeichnet,**
**dass** die Schicht (3) eine transparente Zubereitung, Mischung und/oder Reinsubstanz enthält.

8. Verfahren nach Anspruch 7,
**dadurch gekennzeichnet,**
**dass** die Zubereitung, Mischung oder Reinsubstanz (2) eine aus der Gruppe der kurz- oder langkettigen und/oder ganz oder teilweise ungesättigten Säuren und/oder Basen, Polyamide, -alkohole, -carbonate oder Silikone oder Mischungen davon ausgewählte Zubereitung, Mischung und/oder Reinsubstanz ist.

9. Verfahren nach einem der vorhergehenden Ansprüche,
**dadurch gekennzeichnet,**
**dass** die Schicht (3) bei Aufbringen auf die Oberfläche des biologischen Materials (2) einen die Untersuchungseigenschaften des biologischen Materials (2) in Bezug auf eine Angleichung des Brechungsindex, eine Unterdrückung ungewollter Lichtstreuung und/oder eine verbesserte Visualisierung des biologischen Materials begünstigenden Charakter hat.

10. Verfahren nach einem der vorhergehenden Ansprüche,
**dadurch gekennzeichnet,**
**dass** die Schicht (3) eine UV-Laserlicht absorbierende Schicht ist.

11. Verfahren nach einem der vorhergehenden Ansprüche,
**dadurch gekennzeichnet,**
**dass** die Schicht (3) eine in einer wässrigen Lösung lösliche Zubereitung, Mischung und/oder Reinsubstanz aufweist.

12. Verfahren nach einem der vorhergehenden Ansprüche,
**dadurch gekennzeichnet,**
**dass** die Schicht (3) mindestens eine Substanz zur gezielten Beeinflussung von Untersuchungseigenschaften des biologischen Materials (2) bei Bestrahlung mit Licht enthält.

13. Verfahren nach Anspruch 12,
**dadurch gekennzeichnet,**
**dass** die Schicht (3) mindestens eine die RNA des biologischen Materials (3) bei der Lichtbestrahlung konservierende Substanz enthält.

14. Verfahren nach Anspruch 12 oder 13,
**dadurch gekennzeichnet,**
**dass** die Schicht (3) mindestens eine die Fluoreszenzuntersuchungseigenschaften des biologischen Materials (2) gezielt beeinflussende Substanz enthält.

15. Verfahren nach Anspruch 14,
**dadurch gekennzeichnet,**
**dass** die Schicht (3) ein Fluorophor zur Erzielung einer Fluoreszenz bei einer bestimmten Lichtwellenlänge enthält.

16. Verfahren nach Anspruch 14 oder 15,
**dadurch gekennzeichnet,**
**dass** die Schicht (3) mindestens eine Substanz, welche eine Fluoreszenz bei einer bestimmten Lichtwellenlänge unterbindet, enthält.

17. Verfahren nach Anspruch 16,
**dadurch gekennzeichnet,**
**dass** die Substanz zur Unterbindung der Fluoreszenz derart gewählt ist, dass sie bei der bestimmten Lichtwellenlänge durch Quenching im Sinne einer Stern-Vollmer-Analyse die Fluoreszenz bei bimolekularem Quenching wesentlich stärker unterbindet als deren Eigenabregung bei inhärent-unimolekularer Kinetik erlaubt.

18. Verfahren nach einem der vorhergehenden Ansprüche,
**dadurch gekennzeichnet,**
**dass** die Schicht (3) eine in einem Lösungsmittel gelöste Zubereitung, Mischung und/oder Reinsubstanz aufweist, welche auf die Oberfläche des biologischen Materials (2) aufgetragen wird.

19. Verfahren nach Anspruch 18,
**dadurch gekennzeichnet,**
**dass** das Lösungsmittel, in dem die Zubereitung, Mischung und/oder Reinsubstanz gelöst ist, ein aus der Gruppe der kurzkettigen Alkohole, Ketone, Ester, Benzine oder Wasser ausgewähltes Lösungsmittel ist.

20. Verfahren nach einem der vorhergehenden Ansprüche,
**dadurch gekennzeichnet,**
**dass** die Schicht (3) derart ausgestaltet ist, dass sie nach einer Verdichtung an der Luft ein Schneiden und/oder Katapultieren der Schicht (3) sowie des darunter befindlichen biologischen Materials (2) mit einem Laserstrahl, insbesondere einem UV-Laserstrahl, ermöglicht.

21. Anordnung mit einem Trägermittel (1) und einem auf dem Trägermittel (1) befindlichen biologischen Material (2), wobei auf die Oberfläche des biologischen Materials (2) eine transparente Schicht (3) zur Ausgleichung von Unebenheiten der Oberfläche des biologischen Materials (2) zur Verbesserung von Untersuchungseigenschaften des biologischen Materials (2) für eine Untersuchung mit einem Mikroskop aufgetragen ist,
**dadurch gekennzeichnet,**
**dass** die Schicht (3) eine Laserlicht absorbierende Schicht ist.

22. Anordnung nach Anspruch 21,
**dadurch gekennzeichnet,**
**dass** das biologische Material (3) ein nach einem der Ansprüche 1-20 aufbereitetes biologisches Material ist.

## Claims

1. A method for preparing a biological material for examination with a microscope,
wherein a transparent layer (3) is applied on to one surface of the biological material (2) to level out irregularities on the surface of the biological material (2) to improve examination properties of the biological material (2),
**characterised in that**
the layer (3) is a laser light-absorbing layer.

2. The method according to Claim 1,
**characterised in that**
the layer (3) is sprayed on to the surface of the biological material (2).

3. The method according to Claim 1,
**characterised in that**
the layer (3) is brushed on to the surface of the biological material (2).

4. The method according to Claim 1,
**characterised in that**
the layer (3) is applied on to the surface of the biological material (2) by dipping the biological material (2) into an immersion bath.

5. The method according to one of the preceding claims,
**characterised in that**
the layer (3) is non-toxic.

6. The method according to one of the preceding claims,
**characterised in that**
the layer (3) is inert and, when applied on to the biological material (2), does not have a disadvantageous chemical or biological effect on the biological material (2).

7. The method according to one of the preceding claims,
**characterised in that**
the layer (3) contains a transparent preparation, mixture and/or pure substance.

8. The method according to Claim 7,
**characterised in that**
the preparation, mixture or pure substance (2) is a preparation, mixture and/or pure substance selected from the group of the short- or long-chain and/or completely or partially unsaturated acids and/or bases, polyamides, polyalcohols, polycarbonates or silicones or mixtures thereof.

9. The method according to one of the preceding claims,
**characterised in that**
the layer (3), when applied on to the surface of the biological material (2), has a nature which promotes the examination properties of the biological material (2) in terms of an adjustment of the refractive index, suppression of undesired light scattering and/or improved visualisation of the biological material.

10. The method according to one of the preceding claims,
**characterised in that**
the layer (3) is a UV laser light-absorbing layer.

11. The method according to one of the preceding claims,
**characterised in that**
the layer (3) comprises a preparation, mixture and/or pure substance which is soluble in an aqueous solution.

12. The method according to one of the preceding claims,
**characterised in that**
the layer (3) contains at least one substance to exert a targeted effect on examination properties of the biological material (2) when irradiated with light.

13. The method according to Claim 12,
**characterised in that**
the layer (3) contains at least one substance which preserves the RNA of the biological material (3) during light irradiation.

14. The method according to Claim 12 or 13,
**characterised in that**
the layer (3) contains at least one substance having a targeted effect on the fluorescence examination properties of the biological material (2).

15. The method according to Claim 14,
**characterised in that**
the layer (3) contains a fluorophore to achieve fluorescence at a specific light wavelength.

16. The method according to Claim 14 or 15,
**characterised in that**
the layer (3) contains at least one substance which prevents fluorescence at a specific light wavelength.

17. The method according to Claim 16,
**characterised in that**
the substance which prevents fluorescence is selected such that, at the specific light wavelength, by quenching in the sense of a Stern-Vollmer analysis it prevents fluorescence with bimolecular quenching substantially more markedly than permitted by its intrinsic relaxation with inherent unimolecular kinetics.

18. The method according to one of the preceding claims,
**characterised in that**
the layer (3) comprises a preparation, mixture and/or pure substance dissolved in a solvent, which is applied on to the surface of the biological material (2).

19. The method according to Claim 18,
**characterised in that**
the solvent in which the preparation, mixture and/or pure substance is dissolved is a solvent selected from the group of the short-chain alcohols, ketones, esters, petroleum distillates or water.

20. The method according to one of the preceding claims,
**characterised in that**
the layer (3) is designed such that, after compression in air, it permits cutting and/or catapulting of the layer (3) together with the biological material (2) located thereunder with a laser beam, particularly a UV laser beam.

21. An arrangement with a support means (1) and a biological material (2) located on the support means (1), wherein a transparent layer (3) is applied on to the surface of the biological material (2) to level out irregularities in the biological material (2) to improve examination properties of the biological material (2) for examination with a microscope,
**characterised in that**
the layer (3) is a laser light-absorbing layer.

22. The arrangement according to Claim 21,
**characterised in that**
the biological material (3) is a biological material prepared in accordance with one of Claims 1-20.

## Revendications

1. Procédé pour la préparation d'une matière biologique pour une analyse au microscope, dans lequel est appliquée, sur une surface de la matière biologique (2), une couche transparente (3) pour lisser les aspérités de la surface de la matière biologique (2) pour,améliorer les propriétés d'analyse de la matière biologique (2), **caractérisé en ce que** la couche (3) est une couche absorbant la lumière laser.

2. Procédé selon la revendication 1, **caractérisé en ce que** la couche (3) est pulvérisée sur la surface de la matière biologique (2).

3. Procédé selon la revendication 1, **caractérisé en ce que** la couche (3) est appliquée par badigeonnage sur la surface de la matière biologique (2).

4. Procédé selon la revendication 1, **caractérisé en ce que** la couche (3) est appliquée sur la surface de la matière biologique (2) par trempage de la matière biologique (2) dans un bain d'immersion.

5. Procédé selon l'une des revendications précédentes, **caractérisé en ce que** la couche (3) n'est pas toxique.

6. Procédé selon l'une des revendications précédentes, **caractérisé en ce que** la couche (3) est inerte et qu'elle n'a pas d'influence chimique ni biologique négative sur la matière biologique (2) lorsqu'elle est appliquée sur la matière biologique (2).

7. Procédé selon l'une des revendications précédentes, **caractérisé en ce que** la couche (3) contient une préparation, un mélange et/ou une substance pure transparents.

8. Procédé selon la revendication 7, **caractérisé en ce que** la préparation, le mélange ou la substance pure (2) sont une préparation, un mélange et/ou une substance pure choisis dans le groupe des acides et/ou des bases à chaîne courte ou longue et/ou complètement ou partiellement insaturés, des polyamides, polyalcools, polycarbonates ou silicones ou de leurs mélanges.

9. Procédé selon l'une des revendications précédentes, **caractérisé en ce que** la couche (3), lorsqu'elle est appliquée sur la surface de la matière biologique (2), possède une caractéristique favorisant les propriétés d'analyse de la matière biologique (2) en rapport avec un ajustement de l'indice de réfraction, une atténuation de la dispersion indésirable de la lumière et/ou une amélioration de la visualisation de la matière biologique.

10. Procédé selon l'une des revendications précédentes, **caractérisé en ce que** la couche (3) est une couche absorbant la lumière laser UV.

11. Procédé selon l'une des revendications précédentes, **caractérisé en ce que** la couche (3) présente une préparation, un mélange et/ou une substance pure solubles dans une solution aqueuse.

12. Procédé selon l'une des revendications précédentes, **caractérisé en ce que** la couche (3) contient au moins une substance qui influence de manière ciblée les propriétés d'analyse de la matière biologique (2) lors de son exposition à la lumière.

13. Procédé selon la revendication 12, **caractérisé en ce que** la couche (3) contient au moins une substance conservant l'ARN de la matière biologique (3) lors de son exposition à la lumière.

14. Procédé selon la revendication 12 ou 13, **caractérisé en ce que** la couche (3) contient au moins une substance qui influence de manière ciblée les propriétés d'analyse par fluorescence de la matière biologique (2).

15. Procédé selon la revendication 14, **caractérisé en ce que** la couche (3) contient un fluorophore pour obtenir une fluorescence à une longueur d'onde lumineuse déterminée.

16. Procédé selon la revendication 14 ou 15, **caractérisé en ce que** la couche (3) contient au moins une substance qui empêche une fluorescence à une longueur d'onde lumineuse déterminée.

17. Procédé selon la revendication 16, **caractérisé en ce que** la substance pour empêcher la fluorescence est choisie de manière à ce que, à la longueur d'onde lumineuse déterminée, par quenching au sens d'une analyse de Stern-Vollmer, elle inhibe considérablement plus fortement la fluorescence par quenching moléculaire qu'elle ne permet son déclin par cinétique unimoléculaire inhérente.

18. Procédé selon l'une des revendications précédentes, **caractérisé en ce que** la couche (3) présente une préparation, un mélange et/ou une substance pure dissous dans un solvant qui est appliqué sur la surface de la matière biologique (2).

19. Procédé selon la revendication 18, **caractérisé en ce que** le solvant dans lequel la préparation, le mélange et/ou la substance pure sont dissous est un solvant choisi dans le groupe des alcools à chaîne courte, de la cétone, de l'ester, de la benzine ou de l'eau.

20. Procédé selon l'une des revendications précédentes, **caractérisé en ce que** la couche (3) est organisée de telle sorte qu'elle permette, après une compression à l'air, une découpe et/ou un catapultage de la couche (3) ainsi que de la matière biologique (2) se trouvant dessous avec un rayon laser, en particulier un rayon laser UV.

21. Arrangement avec un support (1) et une matière biologique (2) se trouvant sur le support (1), une couche transparente (3) étant appliquée sur la surface de la matière biologique (2) pour lisser les aspérités de la surface de la matière biologique (2) pour améliorer les propriétés d'analyse de la matière biologique (2) pour une analyse au microscope, **caractérisé en ce que** la couche (3) est une couche absorbant la lumière laser.

22. Arrangement selon la revendication 21, **caractérisé en ce que** la matière biologique (3) est une matière biologique préparée selon l'une des revendications 1 à 20.
